# EUROPEAN PATENT APPLICATION

(11) **EP 1 806 883 A1**
(43) Date of publication of application: **11.07.2007**
(21) Application number: 06290057.6
(22) Date of filing: 06.01.2006
(51) Int. Cl.: H04L 12/56

(54) **Method of transmitting data in a discontinuous coverage network**

(71) Applicant: Alcatel Lucent, 75008 Paris (FR)
(72) Inventor: Alberi-Morel, Marie Line, 94230 Cachan (FR); Rouffet, Denis, 92100 Boulogne Bilancourt (FR)
(74) Representative: Richardt, Markus Albert

(57) **Abstract**

A method of transmitting data from a specific network equipment (NE) via a radio access point (RAP1, RAP2) associated with the specific network equipment to a mobile terminal (MT1, MT2) in a discontinuous coverage network (DCN). The discontinuous coverage network comprises at least one transfer zone (TZ1, TZ2) and at least one intermediate area (IZ), wherein data is transferred to and stored in a cache (CA1, CA2) of the mobile terminal (MT1, MT2) while the mobile terminal is in the transfer zone. The proposed method includes a transfer time extension (TTEX) comprising the steps of:
- detecting a filling level of the cache when the mobile terminal exits the transfer area, and
- continuing to fill the cache of the mobile terminal outside a transfer zone until the cache filling level reaches a predefined threshold value (TV).

## Description

### Technical field of the Invention

The present invention relates to a method of transmitting data from a specific network equipment via a radio access point associated with the specific network equipment to a mobile terminal in a discontinuous coverage network with a number of disconnected transfer zones, wherein data is transferred to and stored in a cache of the mobile terminal while the mobile terminal is in a transfer zone.

The present invention also relates to a specific network equipment associated with at least one radio access point of a discontinuous coverage network comprising means for transferring data to at least one mobile terminal in a transfer zone for storage in a cache of the mobile terminal.

Furthermore, the present invention relates to a discontinuous coverage network comprising at least one mobile terminal with a cache and a number of radio access points, each radio access point defining a transfer zone for transferring data to the mobile terminal for storage in the cache.

In addition, the present invention relates to a computer programme product, comprising first programme code sequences operable to transmit data from a specific network equipment via a radio access point associated with the specific network equipment to a mobile terminal in a discontinuous coverage network with a number of disconnected transfer zones, wherein data is transferred to and stored in a cache of the mobile terminal while the mobile terminal is in a transfer zone.

According to the working principle of discontinuous coverage networks, e.g., so-called pico-cell networks or coloured networks, transmission of data from a specific network equipment (NE) via a radio access point to users, e.g. mobile terminals, generally occurs only in high rate data transfer areas which benefit from good conditions for radio-based data transfer. Such high rate data transfer areas are hereinafter referred to as "transfer zones". A given transfer zone is generally made up of N highest radio data areas (corresponding to N physical transmission modes or N physical throughputs) surrounding a given radio access point.

On the other hand, when the conditions for radio-based data transfer are bad, i.e. only medium and low data transfer rates are available, no transmission between access points and users occurs in pico-cell networks. In pico-cell networks, the corresponding zones are called "no-transmission zones". In coloured networks, some additional data transfer may occur in so-called "intermediate zones" located between individual transfer zones by way of specially established transmissions if required to guarantee a particular Quality of Service (QoS), i.e. avoid service breaks and provide fast service start. An intermediate zone is split into two areas, a medium data rate area and a low data rate area. Hereinafter, said no-transmission zones and said intermediate zones will be referred to as "no-transfer zones" in order to distinguish them from the above-defined high data rate transfer zones.

A discontinuous coverage network is generally made up of a number of radio access points (RAPs), a respective transfer zone around each radio access point, and a no-transmission or intermediate zone separating a given radio access point, i.e. the corresponding transfer zone, from other radio access points (the corresponding transfer zones) in the network. Thus, the individual transfer zones of the discontinuous network can be referred to as "disconnected transfer zones". Furthermore, specific network equipment is associated to a plurality of radio access points.
To avoid a service break in the no-transmission or intermediate zone between two transfer zones in the network, in the two kinds of networks described above data is transferred to the users - hereinafter referred to as "mobile terminals"- and stored in a respective cache memory of the mobile terminals during their crossing of transfer zones. The cached data is then used in the no-transmission or intermediate zones to make an application running on the mobile terminals operate seamlessly. Thus, service breaks in the no-transfer zones between transfer zones are mainly avoided owing to cache memories and corresponding caching mechanisms located in said specific network equipment (NE), i.e., in the Access Controller in the case of pico-cell networks and in the Gateway (GW) in the case of coloured networks as well as in the terminal client on the mobile terminal. In particular, pico-cells networks networks have been previously described in co-pending application EP 04291979.5, filed 03 August 2004, the disclosure of which is herewith incorporated by reference into the present description. This approach allows high data volume storage in the terminal cache during crossing of the transfer zones and use of this data in the no-transfer zones to make the application operate seamlessly.

In order to provide a very low probability of service breaks, i.e. guarantee a given QoS, the caches of mobile terminals leaving a given transfer zone should be filled with data to a maximum extend. Therefore, in known discontinuous coverage networks robust methods of data packet scheduling (also referred to as lines of cache (LoC)) and suitable Medium Access Control (MAC) protocols typically allow all users to receive the required LoC for a given application before leaving a transfer zone. However, when network traffic becomes dense due to a high number of users being present simultaneously in a given transfer zone, the MAC cannot serve all of the terminals fairly during their transfer zone crossing, or if the transfer zone crossing time is not long enough, some of the mobile terminals will leave the transfer zone although their respective cache is not yet filled to said maximum level due to the dense traffic conditions and the others reasons mentioned above. This leads to an increase in the number of service breaks in discontinuous coverage networks.

Thus, there is a need in the art for a technical solution that solves the problem of service breaks in discontinuous coverage networks.

It is the object of the present invention to provide a method of the above-mentioned type which obviates the common disadvantage of service breaks in discontinuous coverage networks. It is also an object of the present invention to provide specific network equipment associated with at least one radio access point of a discontinuous coverage network, which is operable to translate into practise the above-mentioned method in accordance with the present invention. Furthermore, the present invention aims at providing a discontinuous coverage network, which can be operated in accordance with the inventive method.

### Summary of Invention

According to a first aspect of the present invention, the object is achieved by providing a method of the above-mentioned type, wherein the method includes a transfer time extension comprising the steps of detecting a filling level of the cache when the mobile terminal exits the transfer zone, and continuing to fill the cache of the mobile terminal outside the transfer zone until the cache filling level reaches a predefined threshold value.

According to a second aspect of the present invention, the object is achieved by providing a specific network equipment of the above-mentioned type, wherein specific network equipment includes a transfer time extension apparatus comprising detector means adapted to detect a filling level of the cache when the mobile terminal exits the transfer area, and continuation means adapted to continue to fill the cache of the mobile terminal outside the transfer zone until the cache filling level reaches a predefined threshold value.

According to a third aspect of the present invention, the object is achieved by a providing a discontinuous coverage network of the above-mentioned type, wherein said network comprises the special network equipment according to said second aspect of the present invention.

According to a fourth aspect of the present invention, the object is further achieved by providing a computer programme product of the above-mentioned type, which comprises second programm code sequences operable to implement a transfer time extension comprising the steps of:
- detecting a filling level of the cache when the mobile terminal exits the transfer zone, and
- continuing to fill the cache of the mobile terminal outside a transfer zone until the cache filling level reaches a predefined threshold value.

Thus, as a basic idea the present invention suggests to extend a data transfer time for data transfers between a radio access point and a mobile terminal. Said transfer time is extended for a certain amount of time after the mobile terminal leaves the transfer area. In this way, said extension is applied in a flexible way only for users which require additional data for to fill their respective cache to said predefined filling level.

In another embodiment of the method in accordance with the present invention the transfer time extension further comprises the steps of determining a number of scheduled data transfers from the access controller to other mobile terminals, and continuing to fill the cache of the mobile terminal outside the transfer zone in accordance with said number. In this way it is ensured that the time extension procedure in accordance with the present invention can be employed without reducing the bandwidth for other users (mobile terminals) in the respective transfer zone. In other words: If said number of co-pending data transfers from the access controller to other mobile terminals is too high, i.e. exceeds a predetermined value, then there will be no bandwidth available for a transfer time extension. Thus, data transfer time is extended only for users which leave a transfer zone with an unfilled cache while the other users (mobile terminals) have their respective cache already filled to said maximum level in the same transfer zone, i.e. there is no pending or ongoing data transfer, such that free bandwidth is available in terms of throughput in order to manage the required transfer time extension.

In a corresponding embodiment of the specific network equipment in accordance with the present invention the transfer time extension apparatus further comprises determining means adapted to determine a number of scheduled data transfers, i.e. lines of cache (LoC), to other mobile terminals and operable to continue to fill the cache of the mobile terminal outside the transfer zone in accordance with said number.

Owing to the proposed transfer time extension, the continuous coverage network in accordance with the present invention generally does not interrupt data transfer to mobile terminals which leave the coverage of a transfer zone. On the contrary, an existing data transfer connection is maintained as long as there are still data packets to be sent, e.g., comprised in a scheduler queue, providing there is enough free bandwidth available.

In order to avoid an over-dimensioning and an excessive complexity of the proposed mechanism, in another embodiment of the method in accordance with the present invention, said method further comprises the steps of detecting terminals leaving the transfer zone without reaching a predefined cache filling level and enabling the transfer time extension in accordance with the detection result. Thus, the transfer time extension is triggered only if necessary. In a corresponding embodiment of the specific network equipment in accordance with the present invention the latter further comprises detecting means adapted to detect terminals leaving the transfer zone without reaching a predefined cache filling level and to enable the transfer time extension in accordance with a detection result.

As already stated above, the general idea of the present invention resides in a transfer time extension beyond the coverage of a transfer zone if required by a given user and depending on a number of LoCs in the cache scheduler queue as well as on the bandwidth required to manage said extension. In this way, the approach proposed by the present invention dramatically reduces the number of mobile terminals leaving a transfer zone with only partially filled cache which leads to a corresponding decrease in service breaks.

Further advantages and characteristics in accordance with the present invention can be gathered from the following description of preferred embodiments given by way of example only with reference to the enclosed drawings. Features mentioned above as well as below can be used in accordance with the invention either individually or in conjunction. The embodiments mentioned are not to be understood as an exhaustive enumeration but rather as examples with regard to the underlying concept of the present invention.

### Brief description of the drawings

- Fig. 1: is a schematic diagram of a discontinuous coverage network in accordance with the present invention;
- Fig. 2: is a detailed diagram illustrating the concept of data transmission in accordance with the present invention in the discontinuous coverage network of Fig. 1;
- Fig. 3: is a schematic block diagram of a specific network equipment of the discontinuous coverage network of Fig. 1; and
- Fig. 4: is a flow chart of the data transmitting method in accordance with the present invention.

### Detailed description

The following detailed description of embodiments in accordance with the present invention refers to the accompanying drawings. The same reference numerals may be used in different drawings to identify the same or similar elements.

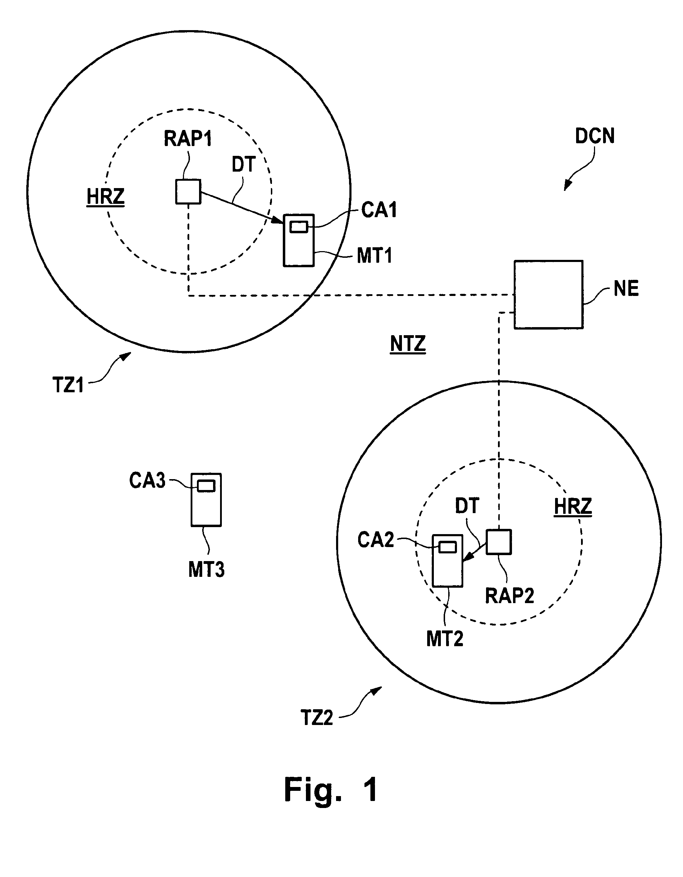

Fig. 1 shows a discontinuous coverage network DCN in accordance with the present invention. The discontinuous coverage network DCN comprises a first radio access point RAP1 and a second radio access point RAP2. In its surroundings, each one of the radio access points RAP1, RAP2, defines a transfer zone TZ1, TZ2, respectively, for data transfer DT to a respective mobile terminal MT1, MT2 located within the transfer zone TZ1, TZ2. Each transfer zone TZ1, TZ2 comprises a high data rate transfer zone HRZ. Within the high data rate transfer zone HRZ surrounding a given access point, e.g. access point RAP2, data can be transferred from the radio access point RAP2 to a mobile terminal, e.g. mobile terminal MT2, located inside the high data rate transfer zone HRZ at a high data rate. The high data rate transfer zone HRZ around a given radio access point RAP1, RAP2 is subdivided into a plurality of different transfer areas, e.g. characterised by different physical transfer modes, as indicated by means of a dashed circle in Fig. 1. For reason of clarity, only two of these transfer areas are depicted for each of the radio access points RAP1, RAP2.

Each of the mobile terminals MT1-MT3 depicted in Fig. 1 comprises a cache memory CA1-3 (hereinafter simply referred to as "cache") for storing the data transferred by the radio access points RAP1, RAP2 of the discontinuous coverage network DCN.

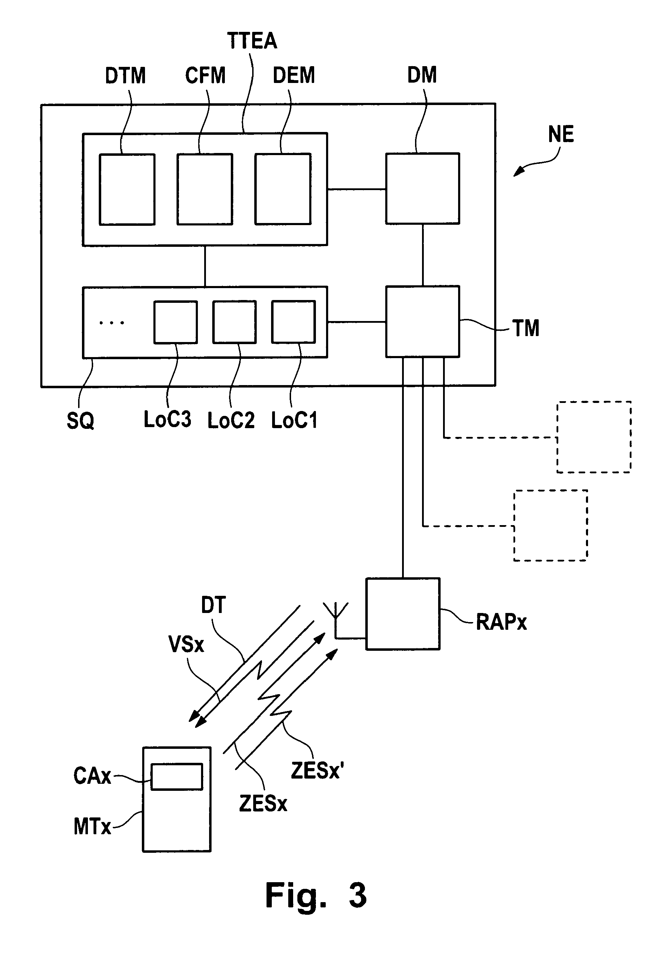

The discontinuous coverage network DCN of Fig. 1 further comprises a no-transfer zone NTZ, i.e. a no-transmission zone or an intermediate zone, extending between the respective transfer zone TZ1, TZ2 of the radio access points RAP1, RAP2. The no-transfer zone NTZ is characterised by medium and low data rate for data transfer from the radio access points RAP1, RAP2 to a mobile terminal, e.g. mobile terminal MT3, located inside the no-transfer zone NTZ. Associated with the radio access points RAP1, RAP2 is a specific network equipment NE, the nature and function of which will be described in detail with reference to appended Fig. 3.

In the discontinuous coverage network DCN of Fig. 1 data transfer DT from a radio access point to a mobile terminal generally only occurs when the mobile terminal is located inside a high data rate transfer zone HRZ surrounding a radio access point. While a mobile terminal is located inside the no-transfer zone NTZ, generally no data transfer DT occurs, and the mobile terminal, e.g. mobile terminal MT3, uses data stored in its cache CA3 for to make an application (not shown) running on the mobile terminal MT3 operate seamlessly before (re-)entering the respective transfer zone TZ1, TZ2 of a radio access point RAP1, RAP2 for further data transfer DT.

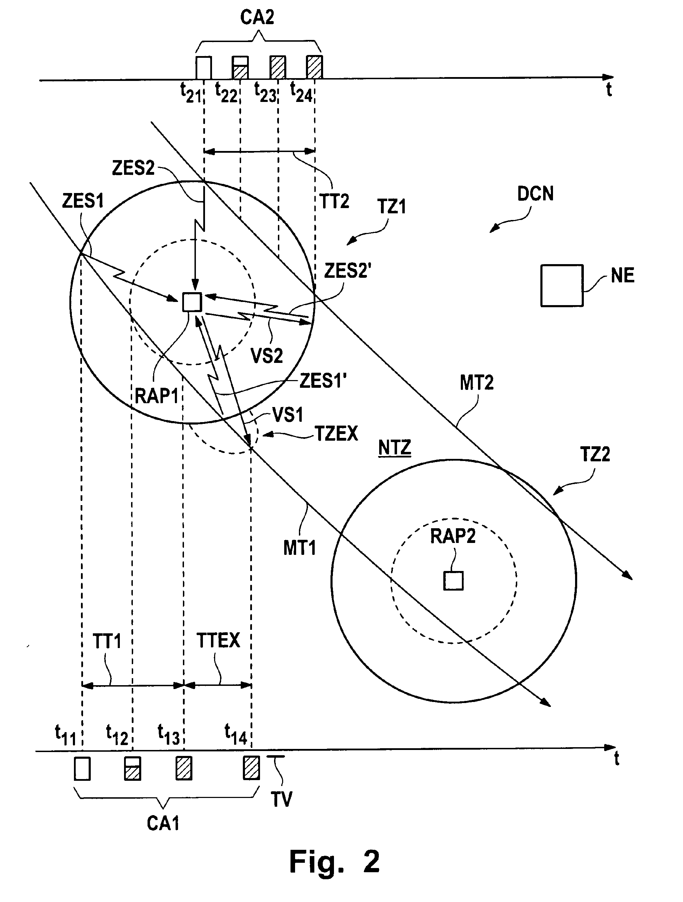

However, in accordance with the present invention, the transfer areas TZ1, TZ2 can be extended in a flexible way for to avoid that a mobile terminal MT1, MT2 leave the respective transfer zone TZ1, TZ2 before the data transfer DT is complete. This will now be explained in detail with reference to appended Figs. 2 to 4.

Fig. 2 illustrates the inventive concept of transfer zone / transfer time extension. The arrows MT1, MT2 in Fig. 2 show the trajectories of two mobile terminals (cf. Fig. 1), which traverse the transfer zone TZ1 of a first access point RAP1, a no-transfer zone NTZ and the transfer zone TZ2 of a second access point RAP2. While the mobile terminals MT1, MT2 are located inside the transfer zones, e.g. transfer zone TZ1 of radio access point RAP1, data is transferred from the radio access point RAP1 to the respective caches CA1, CA2 of the mobile terminals MT1, MT2, as explained above with reference to Fig. 1. In the present Fig. 2, said cache filling operation is illustrated by means of box-shaped symbols representing the respective caches CA1, CA2 of the mobile terminals MT1, MT2, wherein said box-shaped symbols are arranged on a respective time axis, denoted t and wherein a hashed area inside the box-shaped symbols illustrates a cache filling level of the respective mobile terminal MT1, MT2 at a given time t.

Referring first to mobile terminal MT2 (upper time axis t), said mobile terminal enters the transfer zone TZ1 of radio access point RAP1 at a time t₂₁ with an empty cache CA2. In an embodiment of the method in accordance with the present invention, the mobile terminal MT2 then sends a zone entry signal ZES2 to the specific NE (see below) associated with the radio access point RAP1, which in turn transfers data to the mobile terminal MT2 in order to fill up its cache CA2, as explained in detail above with reference to Fig. 1. In a general way, the terminal detects its entry into a high rate area (corresponding to the physical transmission mode the data must be transferred to the particular user) thanks to transmission channel radio link quality measurements made by the terminal itself and informs the network that it is ready to receive data, and a corresponding signal is sent to the network. Then the data is transferred from the specific network equipment NE via the corresponding radio access point, i.e. radio access point RAP1, to the mobile terminal. At a later time t₂₂ the cache CA2 of the mobile terminal MT2 is partly filled while the mobile terminal MT2 has moved inside the transfer zone TZ1 of access point RAP1. At a subsequent time t₂₃ the cache CA2 of the mobile terminal MT2 has been completely filled with data transferred by the radio access point RAP1. At a later time t₂₄ the mobile terminal MT2 leaves the transfer zone TZ1 of access point RAP1. When the mobile terminal MT2 leaves the transfer zone TZ1 of access point RAP1, it sends a zone exit signal ZES2' to thereto the specific network equipment NE via the radio access point RAP1. The specific network equipment NE then sends a validation signal VS2 to the mobile terminal MT2 via the radio access point RAP1 which indicates the end of data transfer (end of the respective LoC-line of cache) to the mobile terminal MT2, which then enters the no-transfer zone NTZ on its way to the next transfer zone TZ2 of access point RAP2. Thus, generally when the mobile terminal exits a high data rate area, it detects this event and accordingly informs the specific network equipment NE about its new status, whereupon the latter stops the data transfer. The time interval [t₂₄-t₂₁] can be referred to as the data transfer time TT2 for mobile terminal MT2.

Referring now to the other mobile terminal MT1 (lower time axis t) in Fig. 2, said mobile terminal enters the transfer zone TZ1 at t₁₁ and sends a corresponding zone entry signal ZES1 to the specific network equipment NE via the radio access point RAP1. However, when mobile terminal MT1 leaves the transfer zone TZ1 at t₁₃, its cache CA1 is only partly filled with data transferred from the radio access point RAP1 (cf. the hashed area in the box-shaped symbols in Fig. 2). In other words: the data transfer time TT1 = t₁₃ - t₁₁ for mobile terminal MT1 was not sufficiently long for transferring all the required data from the radio access point RAP1 to the cache CA1 of mobile terminal MT1. Thus, in accordance with the present invention, the specific network equipment NE does not send a validation signal indicative of the end of data transmission at t₁₃ to the mobile terminal MT1 but continuous to transfer data until at a later time t₁₄ the cache CA1 of mobile terminal MT1 is filled to a predetermined threshold value TV. In the embodiment of Fig. 2 said threshold value TV corresponds to a complete fill of the cache CA1 of mobile terminal MT1. The additional data transfer time for mobile terminal MT1 (t₁₄ - t₁₃) is also referred to as transfer time extension TTEX. Said transfer time extension TTEX corresponds to a transfer zone extension TZEX denoted by means of a dashed line in Fig. 2, which defines an additional transfer zone adjacent to transfer zone TZ1. When the mobile terminal MT1 leaves the transfer zone extension TZEX, i.e., when the cache CA1 of mobile terminal MT1 is completely filled, the specific network equipment NE sends a validation signal VS1 to the mobile terminal MT1 via the radio access point RAP1 for to indicate the end of data transfer (end of LoC). The mobile terminal MT1 then moves on towards the transfer zone TZ2 of access point RAP2.

A configuration of a specific network equipment NE suitable to perform the above-described method in accordance with the present invention will now be described with reference to appended Fig. 3.

Fig. 3 shows a schematic block diagram of a specific network equipment NE associated with at least one radio access point RAPx (x= 1, 2) for use in the discontinuous coverage network DCN of Figs. 1 and 2. The network equipment NE comprises transceiver means TM, i.e. transmitter means and receiver means, for communicating with a mobile terminal Mtx via said associated access point RAPx. The network equipment NE further comprises a scheduler queue SQ with a number of lines of cache LoC1-LoC3 comprising data to be transferred to a respective mobile terminal such as mobile terminal MTx. Each line of cache LoC1-LoC3 includes a number of data packets (not shown) to be transferred. Upon receipt of a zone entry signal ZESx from mobile terminal MTx the network equipment NE starts to transmit the contents of the corresponding line of cache LoCx via the transmitter means of the transceiver means TM and the radio access point RAPx to the mobile terminal MTx.

Furthermore, the specific NE comprises a transfer time extension apparatus TTEA including detector means DEM adapted to detect a filling level of a cache CAx of the mobile terminal MTx when the mobile terminal exits the transfer zone (not shown) of the radio access point RAPx. To this end, the terminals regularly send the status of their cache filling level to the specific network equipment NE. Thus, the network knows the cache filling levels of all the terminals. The transfer time extension apparatus TTEA further includes continuation means CFM adapted to continue to fill the cache CAx of a mobile terminal MT outside the transfer area, i.e. in the no-transfer zone NTZ of Figs. 1 and 2, until the cache filling level reaches a predefined threshold value TV (Fig. 2). In the embodiment of Fig. 3, the transfer time extension apparatus TTEA further includes determining means DTM adapted to determine a number of scheduled data transfers LoC1-LoC3 from the radio access point RAPx to other mobile terminals and operable to enable said continuation means CFM in accordance with said number. Furthermore, the transfer time extension apparatus TTEA includes detecting means DM adapted to detect mobile terminals leaving the transfer zone without reaching the predefined cache filling level and operable to enable the transfer time extension apparatus TTEA in accordance with a peak detection result. Thus, the TTEA is only activated while the cache filling level of some mobile terminals does not reach the predefined level when exiting from the transfer zone. On the other hand, when the predefined level is reached, the TTEA is des-activated for that particular mobile terminal.

During operation of the specific network equipment NE the detecting means DM monitor the discontinuous coverage network DCN (Fig. 1) for mobile terminals leaving a transfer zone with only partially filled cage. When a detection result obtained by the detecting means PDM indicates the existence of terminals leaving a transfer zone with only partially filled cage, the transfer time extension apparatus TTEA is enabled, i.e. transfer time extension is triggered to avoid a high number of mobile terminals leaving the transfer zone with only partly filled cache memory. Upon receipt of a zone exit signal ZESx' from a given mobile terminal MTx, the detector means DEM detect the filling level of the cache CAx of mobile terminal MTx when the latter leaves the transfer zone. If the cache CAx is only partly filled, i.e. there are still data packets left in the corresponding line of cache LoC1-LoC3, then the continuation means CFM continue to fill a cache CAx of a mobile terminal MTx outside the transfer zone until the cache filling level reaches a predefined threshold value TV (Fig. 2). Preferably, said threshold value TV corresponds to a completely filled cache CAx of the mobile terminal MTx and to a corresponding empty line of cache LoC1-LoC3, whereupon the radio access point RAPx sends a validation signal VSx to the respective mobile terminal MT.

The specific network equipment knows the status of the cache filling level of a given terminal at the entry of the transfer zone. Therefore, it can deduce the amount of data that must be sent to this particular terminal for the cache filling level to reach the predefined level. Thus, the specific network equipment also knows how much scheduled data must be transferred to the terminals, and it is therefore able to deduce if the cache filling level has reached the predefined level from the amount of scheduled data sent when the specific network equipment receives a message from a terminal that is leaving the transfer zone. If the cache filling level has not been reached, the transfer time extension is triggered, as described above. This procedure is more precise and less complicated than an alternative procedure that involves checking if scheduled data are left in the scheduler queue.

However, in accordance with the present invention enabling of the continuation means CFM is dependent on a state of the determining means DTM. During operation of the radio access point RAPx, the latter continuously monitors the scheduler queue SQ in order to determine a number of simultaneously pending data transfers from the radio access point RAPx to other mobile terminals. Since each data transfer to a mobile terminal MTx requires a certain amount of bandwidth the continuation means CFM are only activated to continue to fill the cache CAx of a mobile terminal MTx leaving the transfer zone if a required bandwidth for this transfer zone extension (cf. Fig. 2) is available despite the number of lines of cache LoC1-LoC3 comprised in the scheduler queue SQ. If the required bandwidth for transfer time extension is not available, then data transfer DT to the mobile terminal MTx is terminated despite of the only partially filled cache CAx. In this case specific network equipment NE sends a validation signal VSx to the mobile terminal MTx via the radio access point RAPx.

In a particular embodiment in accordance with the present invention, the above-described functionalities of the specific network equipment are implemented by means of a suitable computer programme product provided on any suitable data carrier medium, e.g. on an optical data carrier (CD, DVD) or via a computer network, which comprises the required programme code sequences.

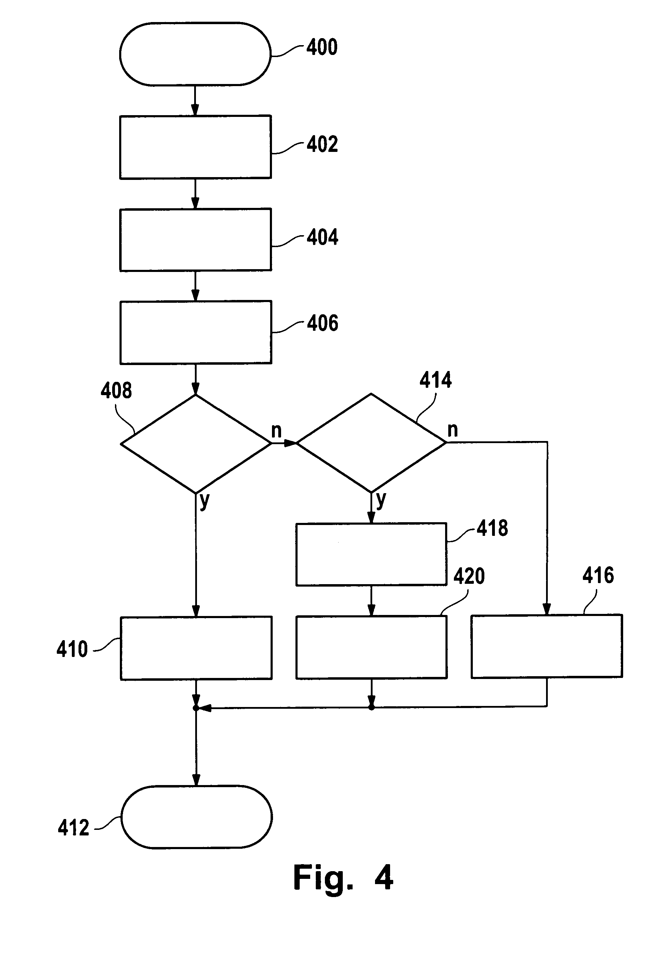

Fig. 4 shows a flow chart of the data transmission method in accordance with the present invention as described above with reference to Figs. 1 to 3. Provided the transfer time extension apparatus TTEA of Fig. 3 has been enabled by the detecting means DM, the method starts with step 400. In a subsequent step 402 a mobile terminal MTx issues a zone entry signal ZESx, which is received by a corresponding-specific network equipment NE via the radio access point RAPx associated with the specific network equipment NE (Fig. 3). In subsequent step 404 the specific network equipment NE via the radio access point RAPx associated with the specific network equipment NE transfers data to the mobile terminal for storage in the cache CAx. At 406 the mobile terminal leaves the transfer zone of the radio access point and accordingly transmits a zone exit signal ZESx' to the specific network equipment NE.

Then, in step 408 it is determined by the detector means DEM of Fig. 3 whether or not the cache CAx of the mobile terminal MTx is sufficiently filled (cf. threshold value TV in Fig. 2) or not. If the question in step 408 is answered in the affirmative (y) then in step 410 the specific network equipment NE sends a validation signal VSx to the mobile terminal, and the method terminates with step 412. Otherwise, if the question in step 408 is answered in the negative (n), then in subsequent step 414 it is checked by the determining means DTM of Fig. 3 whether or not there is available bandwidth for a transfer time extension. If the question in step 414 is answered in the negative (n), then in step 416 the specific network equipment NE validates the end of data transfer to the mobile terminal, and the method terminates with step 412. Otherwise, if the question in step 414 is answered in the affirmative (y), then in subsequent step 418 the continuation means CFM of Fig. 3 are activated and continue to transfer data to the mobile terminal until a predetermined cache filling level has been reached. Then, in step 420 specific network equipment NE validates the end of data transfer, and the method terminates with step 412.

## Claims

1. A method of transmitting data from a specific network equipment (NE) via a radio access point (RAPx, RAP1, RAP2) associated with the specific network equipment to a mobile terminal (MTx, MT1, MT2) in a discontinuous coverage network (DCN) with a number of disconnected transfer zones (TZx, TZ1, TZ2), wherein data is transferred to and stored in a cache (CAx, CA1, CA2) of the mobile terminal while the mobile terminal is in a transfer zone, **characterised by** a transfer time extension (TTEX) comprising the steps of:
- detecting a filling level of the cache when the mobile terminal exits the transfer zone, and
- continuing to fill the cache of the mobile terminal outside a transfer zone until the cache filling level reaches a predefined threshold value (TV).

2. The method of claim 1, **characterised in that** the transfer time extension further comprises the steps of:
- determining a number of scheduled data transfers (LoC1-LoC3) from the radio access point to other mobile terminals, and
- continuing to fill the cache of the mobile terminal outside the transfer zone in accordance with said number.

3. The method of claim 1, further comprising the steps of:
- detecting a number of mobile terminals leaving a transfer zone with only partially filled cache, and
- enabling the transfer time extension during peaks of network traffic in accordance with the detection result.

4. A specific network equipment (NE) for association with at least one radio access point (RAPx, RAP1, RAP2) of a discontinuous coverage network (DCN), comprising transmitter means (TM) for transferring data to at least one mobile terminal (MTx, MT1, MT2) in a transfer zone (TZx, TZ1, TZ2) for storage in a cache (CAx, CA1, CA2) of the mobile terminal, **characterised by** a transfer time extension apparatus (TTEA) comprising detector means (DEM) adapted to detect a filling level of the cache when the mobile terminal exits the transfer zone, and continuation means (CFM) adapted to continue to fill the cache of the mobile terminal outside the transfer zone until the cache filling level reaches a predefined threshold value (TV).

5. The specific network equipment of claim 4, **characterised in that** the transfer time extension apparatus further comprises determining means (DTM) adapted to determine a number of scheduled data transfers from the radio access point to other mobile terminals and operable to continue to fill the cache of the mobile terminal outside the transfer zone in accordance with said number.

6. The specific network equipment of claim 4, further comprising detecting means (DM) adapted to detect a number of mobile terminals leaving a transfer zone with only partially filled cache and operable to enable the transfer time extension during peaks of network traffic in accordance with the detection result.

7. A discontinuous coverage network (DCN) comprising at least one mobile terminal (MTx, MT1, MT2) with a cache (CAx, CA1, CA2) and a number of radio access points (RAPx, RAP1, RAP2), each radio access point defining a transfer zone (TZx, TZ1, TZ2) for transferring data to the mobile terminal for storage in the cache, **characterised in that** at least one radio access point is associated with a specific network equipment (NE) according to any one of claims 4 to 6.

8. A computer programme product, comprising first programme code sequences operable to transmit data from a specific network equipment (NE) via a radio access point (RAPx, RAP1, RAP2) associated to the specific network equipment to a mobile terminal (MTx, MT1, MT2) in a discontinuous coverage network (DCN) with a number of disconnected transfer zones (TZx, TZ1, TZ2), wherein data is transferred to and stored in a cache (CAx, CA1, CA2) of the mobile terminal while the mobile terminal is in a transfer zone, **characterised by** second programm code sequences operable to implement a transfer time extension (TTEX) comprising the steps of:
- detecting a filling level of the cache when the mobile terminal exits the transfer zone, and
- continuing to fill the cache of the mobile terminal outside a transfer zone until the cache filling level reaches a predefined threshold value (TV).
